(19) Europäisches Patentamt / European Patent Office / Office européen des brevets

(11) **EP 3 951 344 A1**

(12) **EUROPEAN PATENT APPLICATION**

(43) Date of publication:
**09.02.2022 Bulletin 2022/06**

(21) Application number: **21182995.7**

(22) Date of filing: **30.06.2021**

(51) International Patent Classification (IPC):
**G01M 5/00** (2006.01)      **G01L 1/24** (2006.01)
**G01M 11/08** (2006.01)

(52) Cooperative Patent Classification (CPC):
**G01M 5/0033; G01L 1/246; G01M 5/0008;
G01M 5/0041; G01M 5/0091; G01M 11/083**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2020 US 202016984767**

(71) Applicant: **Palo Alto Research Center
Incorporated
Webster, NY 14580 (US)**

(72) Inventors:
• **YU, Hong
  San Jose, 95134 (US)**
• **RAGHAVAN, Ajay
  Mountain View, 94043 (US)**
• **KIESEL, Peter
  Palo Alto, 94304 (US)**
• **ARAKAKI, Kyle
  Palo Alto, 94304 (US)**
• **ANDERSON, Spenser
  Palo Alto, 94304 (US)**

(74) Representative: **Gill Jennings & Every LLP
The Broadgate Tower
20 Primrose Street
London EC2A 2ES (GB)**

(54) **METHODS AND SYSTEMS FOR DAMAGE EVALUATION OF STRUCTURAL ASSETS**

(57)   A plurality of strain values are received from a plurality of sensors permanently attached to an asset configured to carry a load. A strain profile of the asset is monitored based on the plurality of strain values. Additional information about the asset is received. A load rating factor is monitored based on the additional information and the strain profile. An equivalent accumulated damage factor is monitored based on the load rating factor. A remaining life prediction for the asset is calculated based on the strain profile and the equivalent accumulated damage factor.

FIG. 1

**Description**

TECHNICAL FIELD

This application relates generally to techniques for structural health monitoring. The application also relates to components, devices, systems, and methods pertaining to such techniques.

BACKGROUND

Structural health monitoring is a large and growing field of study that aims to use sensors installed on assets to extract useful information about the health or condition of the structure.

SUMMARY

A method involves receiving a plurality of strain values from a plurality of sensors permanently attached to an asset configured to carry a load. A strain profile of the asset is monitored based on the plurality of strain values. Additional information about the asset is received. A load rating factor is monitored based on the additional information and the strain profile. An equivalent accumulated damage factor is monitored based on the load rating factor. A remaining life prediction for the asset is calculated based on the strain profile and the equivalent accumulated damage factor.

A system includes sensors disposed on an asset configured to carry a load, the sensors configured to measure a strain values of the asset for a sample of traffic loading events caused by objects of unknown weight. A processor is configured to receive a plurality of strain values from a plurality of sensors permanently attached to an asset configured to carry a load. A strain profile of the asset is monitored based on the plurality of strain values. Additional information about the asset is received. A load rating factor is monitored based on the additional information and the strain profile. An equivalent accumulated damage factor is monitored based on the load rating factor. A remaining life prediction for the asset is calculated based on the strain profile and the equivalent accumulated damage factor.

A non-transitory computer readable medium involves storing computer program instructions, the computer program instructions when executed by a processor cause the processor to perform operations. The operations comprise receiving a plurality of strain values from a plurality of sensors permanently attached to an asset configured to carry a load. A strain profile of the asset is monitored based on the plurality of strain values. Additional information about the asset is received. A load rating factor is monitored based on the additional information and the strain profile. An equivalent accumulated damage factor is monitored based on the load rating factor. A remaining life prediction for the asset is calculated based on the strain profile and the equivalent accumulated damage factor.

The above summary is not intended to describe each embodiment or every implementation. A more complete understanding will become apparent and appreciated by referring to the following detailed description and claims in conjunction with the accompanying drawings.

BRIEF DESCRIPTION OF THE DRAWINGS

FIG. 1 illustrates a system capable of continuous asset monitoring with a plurality of sensors in accordance with embodiments described herein.
FIGS. 2A and 2B show two different sensor configurations on an asset in accordance with embodiments described herein;
FIG. 3 demonstrates the fusion process for multiple metrics from the fiber optics sensing system and field inspections in accordance with embodiments described herein;
FIG. 4 shows the determination of a strain curve and the extraction of a deflection curve from strain measurements in accordance with embodiments described herein;
FIG. 5 shows a process for determining a remaining life of an asset in accordance with embodiments described herein;
FIG. 6 shows a framework for integrated asset condition assessment and fatigue life prediction in accordance with embodiments described herein;
FIG. 7 demonstrates a finite element model for a tram bridge with curved ramp in accordance with embodiments described herein;
FIG. 8A illustrates two or more line sections with different slopes that may be used to describe more complex stress-life behavior in accordance with embodiments described herein;
FIG. 8B illustrates an example of a standard load in accordance with embodiments described herein;
FIG. 9 shows a transfer a known vehicle load to a standard load in accordance with embodiments described herein;

FIG. 10 shows an example validation test in accordance with embodiments described herein; and

FIG. 11 illustrates a block diagram of a system capable of implementing embodiments described herein.

The figures are not necessarily to scale. Like numbers used in the figures refer to like components. However, it will be understood that the use of a number to refer to a component in a given figure is not intended to limit the component in another figure labeled with the same number.

DETAILED DESCRIPTION

Structural health monitoring is a large and growing field of study that aims to use sensors installed on assets, i.e., structures, to extract useful information about the health or condition of the structure. According to various embodiments described herein, these assets are built with the purpose of supporting loads. The assets can include any structure that can be loaded with objects. For example, the asset may include one or more of a road, a bridge, a runway, a port wharf, a cable structure, and a rail structure. While many embodiments described herein use the example of vehicles driving over a bridge structure, it is to be understood that any of the methods and systems described herein can be applied to any type of structure that can be loaded with objects. The objects may be any object that can apply a load to the asset. For example, the objects can include one or more of motor vehicles, trains, pedestrians, aircrafts, boats, cable cars, ski lifts, and train cars.

These assets may be subjected to complicated load conditions that may include of dead loads, live traffic loads, impact loads and/or other environmental loads (wind, river current etc.). The cyclic stresses with varying magnitude from traffic loads leads to fatigue damage to the asset structure. Damage of failure of these bridge assets, for example may lead to significant loss of lives and property. It is thus helpful to have a monitoring system that consistently checks the condition of the assets and/or predicts the remaining fatigue of the asset under dynamic loading conditions.

Many of the current structure monitoring systems are based on the traditional acceleration or displacement response that requires a well-controlled impact test. For example, some systems rely on the weigh-in-motion (WIM) data for traffic load estimation. While such WIM systems provide an overall description of traffic load, they may not identify traffic load by lane. Also, such systems may lack consideration for old bridges where the initial damage state is unknown. Global structural responses (e.g. vibration modes of the bridge) can be retrieved from the traditional accelerometer, displacement and strain gauge. While the global structural response can indicate the overall condition of the asset, it cannot reflect local damages at an early stage. Strain measurement is directly related to the local damage of structures. Various strain-based methods have been tested on bridge structures. However, traditional point strain sensors can reflect damage only when the damage is covered by the sensor. There are some drawbacks of the current solutions that prevent them from accurately predicting the fatigue life reflecting real traffic load. For example, they may rely on WIM data, which requires additional equipment and system. They may assume simplistic load distributions and load growth patterns. They may not be sensitive to local damage. They may not be able to consider changes to structure such as precondition and/or rehabilitation of the structure. The designed fatigue load may vary significantly from actual traffic load.

Embodiments described herein involve a system and method for evaluating asset health conditions using distributed optical sensing systems. Using a carefully designed network of sensors together with statistical models and beam analysis models, asset condition can be monitored and evaluated continuously. Embodiments allow for real-time monitoring and continuous assessment of structural response under traffic load.

Embodiments described herein combine condition evaluation and fatigue life prediction, eliminating the need for a separate WIM data collection system. The system utilizes distributed sensors (e.g., optical sensors) for both traffic load monitoring and structural health monitoring (both global response such as deflection, and localized response such as stress concentration). It can be applied to both roadway and railway bridges as well as other structures configured to carry a load. The fatigue life prediction method considers the precondition or rehabilitation of bridge structures by estimating a damage equivalence factor from load rating factor, thus works for both new and existing structures.

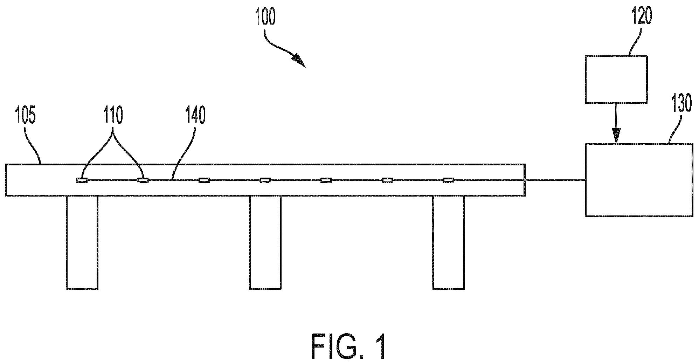

FIG. 1 illustrates a system capable of continuous asset monitoring with a plurality of sensors in accordance with embodiments described herein. A plurality of sensors 110 are disposed on an asset 105. The sensors may be any type of sensor capable of measuring load responses. According to various embodiments, the plurality of sensors are optical sensors. For example, the sensors may be fiber Bragg grating (FBG) strain sensors, Fabry Perot sensors, and/or other interferometric optical sensors. In some cases, the sensors may include one or more of electrical and/or resistive sensors, mechanical sensors, and/or other types of strain gauges. In some cases, a combination of different types of sensors may be used. While the embodiment shown in FIG. 1 depicts seven sensors, it is to be understood that any number of sensors may be used. For example, over 100 sensors may be disposed along the asset.

The plurality of sensors 110 are configured to monitor a set of strain values of the asset 105. A processor 130 coupled to the sensors 110 is configured to monitor at least one statistical parameter from the set of load responses. The processor 130 may receive various information from a database 120 to evaluate asset condition and/or to monitor a remaining fatigue life of the bridge under dynamic loading conditions.

FBG sensors are spectral filters that utilize the principle of Bragg reflection. The gratings are periodic modulations of refractive index, which are inscribed in the core of an optical fiber. Optical fibers are exposed to a periodic pattern of ultraviolet light and, as a result, the gratings consist of alternating regions of high and low refractive indices. The periodic grating elements act as a filter, reflecting a narrow wavelength range, centered about a peak wavelength. An external stimulus (e.g., temperature and/or strain) can change the periodicity of the grating and the index of refraction of the fiber, and thereby alter the reflected wavelength. The resulting wavelength shift may be a measure of the stimulus. The relation between wavelength shift $\Delta\lambda/\lambda$ and strain, temperature is shown in (1).

$$\Delta\lambda/\lambda = \{1 - n^2/2[p_{12} - n(p_{11} + p_{12})]\}\varepsilon_1 + [\alpha + 1/n(dn/dT)]\Delta T \qquad (1)$$

Here, $n$ is the index of refraction, $p_{11}$ and $p_{12}$ are strain-optic constants, $\varepsilon_1$ is longitudinal strain, $\alpha$ is the coefficient of thermal expansion, and $T$ is the temperature. The impacts from strain and temperature on the wavelength shift can be separated with advanced data evaluation algorithms in combination with: (a) multiple FBG sensors that are differently affected by strain and temperature (due to design or mounting), (b) dual fibers, and/or (c) special FBG sensors.

In (2) the strain and temperature sensitivities are abbreviated as $K_\varepsilon$ and $K_T$ respectively, assuming that $K_\varepsilon$ and $K_T$ are substantially linear. The strain and temperature induced wavelength shift can be expressed as shown in (2).

$$\Delta\lambda_B = K_\varepsilon\varepsilon + K_T\Delta T \qquad (2)$$

Here, $K_\varepsilon$ and $K_T$ are the strain sensitivity and temperature sensitivity of the optical fiber, respectively, assuming that $K_\varepsilon$ and $K_T$ are substantially linear. They can be regarded as constant with certain range of wavelength shift. Special attention may be paid to ensure the wavelength shift during the duration of measurement fall into the linear range.

FBG sensors in particular are inherently sensitive to strain, stress, fluid pressure, vibration, acceleration, and temperature. With suitable coatings and special configurations, FBGs and other FO sensors can also be useful for monitoring current, voltage, chemical environment, and corrosion. According to embodiments described herein, the measured wavelength shift can be translated into strain after a series of signal processing steps including temperature compensation, detrending and de-noising. One of the advantages of FO sensing system is that it can collect data at discrete locations and assemble the data to reflect global response of the bridge. This feature is utilized in calculating the load rating factor that can be used for equivalent damage factor estimation.

In the characterization setup, one sensor on the sensor array may be left unbonded to the structure while the others are rigidly bonded. The distance between bonded and unbonded fiber segments may be small enough to assume that they are subject to same or similar environmental temperature changes. Under this condition, the thermal outputs of both bonded and unbonded fiber segments should be substantially identical. Therefore, the stress-induced strain can be calculated by taking a difference of these measurements.

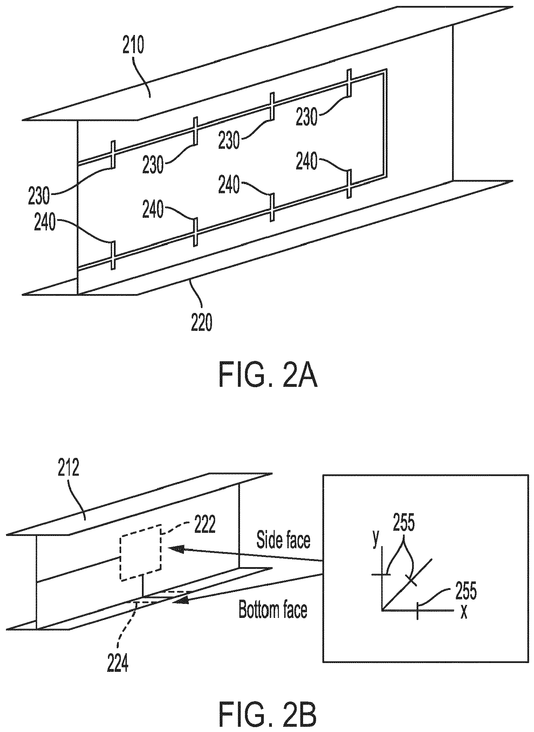

While the fiber optic sensor used in embodiments described herein may be a short gauge sensor that is typically used to measure point-wise strain, it can be combined strategically to capture global structural parameters. FIGS. 2A and 2B show two different sensor configurations for global and local parameter extraction.

In the configuration shown in FIG. 2A, four sensors 230, 240 are distributed evenly along the bottom 220 and top 210 of girder web. These sensors 230, 240 may be used for tensile and compressive strain measurements. This group of strain measurements can be used for defection shape extraction using regression analysis, for example. FIG. 2B shows a second sensor configuration. In the second configuration, three sensors 235 form a specially designed strain rosette. The strain rosettes 222, 224 may be disposed on a side face and a bottom face of the girder web 212. While, FIG. 2B shows an example having one set of strain rosettes, it is to be understood that many strain rosettes may be present. Shear strain and principal strain components can be calculated from the strain rosette. In some fiber arrays, one of the sensors in the array is unbonded to the structure to serve as a temperature sensor.

Typical applications of asset condition assessment may be carried out routinely. Routine inspections may find signs of damage such as cracks, spalls, chemical deterioration, and/or corrosion when these become visible. However, the relation between such visible signs of damage and the corresponding condition of the structure is rather subjective and often relies on reference to bridge inspection standards. Embodiments described herein can be used alone or in conjunction with the visual inspection methods. Both systems may work in a collaborative manner through a structural damage index aggregator that merges evaluation results from multiple models.

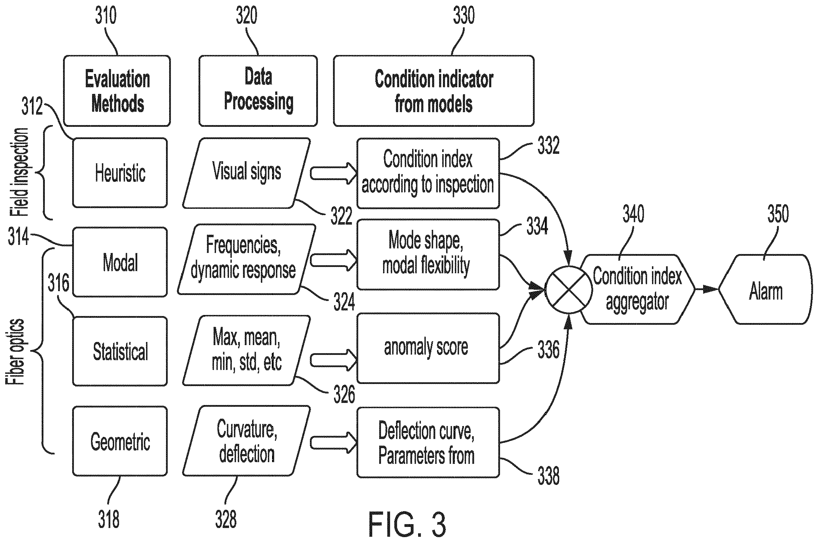

FIG. 3 demonstrates the fusion process for multiple metrics from the fiber optics sensing system and field inspections. FIG. 3 shows various evaluation methods 310 and corresponding data collection 320 and an output condition indicator 330. The field inspection method uses heuristic 312 techniques to determine visual signs 322 by an experienced field inspector. The visual signs 322 may be used to generate a condition index 332 of the asset.

Various fiber optic methods are used. Examples provided in FIG. 3 include modal 314 statistical 316, and geometric 318. One or more of the outputs of the heuristic 312, modal 314, statistical 316, and geometric 318 methods may be aggregated 340 to determine the remaining fatigue life of the asset. If the remaining fatigue life is less than a predetermined threshold, an alarm 350 may be initiated. According to various embodiments described herein, the different methods may be weighted differently than one another to determine the remaining fatigue life of the asset. In some cases, the methods have the same or similar weight in the aggregation process.

The modal method 314 involves an estimation of the structure's vibration mode shapes and/or eigenfrequencies to assess the health. Specifically, referring to FIG. 3, frequencies and the dynamic response 324 may be used to determine a modal shape and/or a modal flexibility 334.

For the statistical method 316, descriptors 326 such as maximum, mean, median, minimum, standard deviation, etc. of strain measurements at multiple locations can be calculated. These descriptions can be fed into anomaly detection algorithms that identify abnormal behavior and produce an anomaly score 336. A flagged anomaly is the departure from the new observation from the postulated model. This flagged anomaly could relate to the failure of the sensor and/or damage of the asset at the sensor location. Strain response may be directly linked to load type and magnitude. Changes in strain distributions can indicate changes in object loads. This is a computationally efficient procedure for extracting load and vehicle passage events from batch sensing data.

For the geometric method, curvature and/or deflection 328 may be used as an indicator for bridge condition evaluation. Threshold values are usually well defined in bridge inspection standards or bridge design guidelines. While the fiber optics sensing system captures strain instead of deflection by default, there are ways to translate strain measurement to deflection curves 338 based on classical beam theory. The relationship between bending curvature and strain can be expressed as shown in (3).

$$\kappa_i = \frac{-\varepsilon_i}{y} \tag{3}$$

Here, $i$ is the $i^{th}$ longitudinal location of a discrete beam, $\varepsilon$ is the longitudinal strain and $y$ is the distance from a neutral axis of cross section. The curvature can be determined by longitudinal strain measurements parallel to the neutral axis. According to various embodiments, the neutral axis may be shifted if damage of the asset and/or temperature variation occurs. Two strain sensors placed at different distances parallel to the neutral axis can be used to eliminate the effect of the shift of the neutral axis (as shown in FIG. 2A). For two sensors at corresponding longitudinal location, the curvature is expressed as shown in (4).

$$\kappa_i = \frac{\varepsilon_i^b - \varepsilon_i^t}{h} \tag{4}$$

Here, $\varepsilon^b$ is the bottom strain, $\varepsilon^t$ is the top strain, and $h$ is the distance between the sensors.

The vertical deflection and/or curvature of bridges are influenced by varied loads from objects, which may be unknown. Thus, a regression analysis may be used to retrieve the curvature and deflection functions. Express curvature function in an $n^{th}$ order polynomial is shown in (5).

$$\kappa_i = c_n x_i^n + c_{n-1} x_i^{n-1} + \ldots + c_1 x_i^1 + c_0 \tag{5}$$

Here, $c_0$, $c_1$, $c_2$, ..., $c_n$ are the coefficients of the curvature function that are obtained by the curvature measurements; x is abscissa along the bridge. The deflected shape function can be determined by double integrating the curvature as shown in (6).

$$v(x) = \iint \kappa(x)dxdx \tag{6}$$

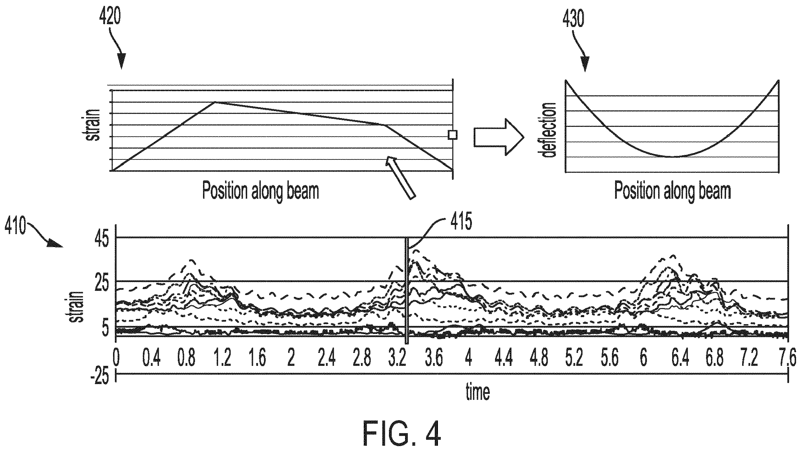

FIG. 4 shows the determination of a strain curve 420 and the extraction of a deflection curve 430 from strain measurements 410 measured by a plurality of sensors taken at time 415.

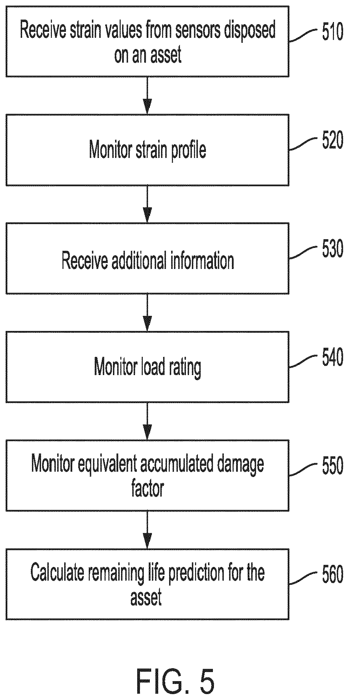

FIG. 5 shows a process for determining a remaining life of an asset in accordance with embodiments described herein. A plurality of strain values are received 510 from a plurality of sensors permanently attached to an asset configured to carry a load. According to various implementations, the plurality of strain values are received continuously. A strain profile of the asset is determined 520 based on the plurality of strain values.

Additional information is received 530 about the asset. According to various embodiments, the additional information comprises one or more of one or more of asset design standards, asset specifications, and locations of the plurality of sensors. A load rating factor is monitored 540 based on the additional information and the strain profile. An equivalent accumulated damage factor is monitored 550 based on the load rating factor. A remaining life prediction is calculated 560 based on the strain profile and the equivalent accumulated damage factor.

According to various embodiments, potential damage accumulation is monitored based on the strain profile. The remaining life prediction for the asset may be calculated by calculating a remaining life prediction for the asset based on the potential damage accumulation and the equivalent accumulated damage factor.

One or more metrics comprising an estimation of stress under a typical load, and average daily damage, and a predicted traffic load are monitored. The potential damage accumulation may be based on the one or more metrics. A stress-life curve of the asset may be received, and the potential damage accumulation may be monitored based on the stress-life curve.

According to various embodiments described herein, it is determined whether the load rating factor is less than a predetermined threshold. If it is determined that the load rating value is less than the predetermined threshold, one or more of inspection and rehabilitation of the asset is recommended. If it is determined that the load rating value is not less than the threshold, the remaining life prediction for the asset is calculated.

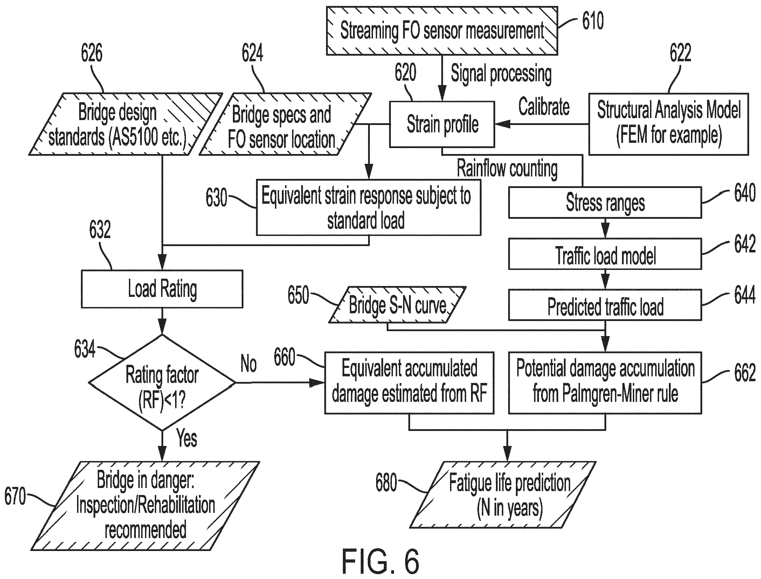

FIG. 6 shows a more detailed framework for integrated asset condition assessment and fatigue life prediction. The inputs include streamlining fiber optic (FO) sensor measurement, asset design standards such as bridge design standards (For example, the Australian bridge standard AS5100), asset specifications and sensor locations, and asset strain-life curves. Blocks 610, 624, 626, and 650 denote inputs, while blocks 670 and 680 denote outputs.

Specifically, streaming fiber optic data is received and used to create a strain profile 620 for the asset. The fiber optic data may be continuously received such that the asset is continuously monitored. In some cases, the fiber optic data is received at discrete intervals. A structural analysis model 622 (e.g., a finite element model) may be used to calibrate the strain profile 620. A rainflow counting procedure may be used to determine an estimation of stress ranges under a typical load 640. A traffic load model 642 denoting average daily damage is created from the stress ranges. The traffic load model 642 is used to determine the predicted traffic load 644. One or more input strain life curves 650 may be used in conjunction with the predicted traffic load 644 to determine the potential damage accumulation 662. For example, the potential damage accumulation may be calculated using the Palmgren-Miner rule.

Input bridge specifications 624 and the strain profile 620 are used to determine an equivalent strain response 630 that is subject to a standard load. The equivalent strain response 630 may be used in combination with bridge design standards 626 for the jurisdiction that the asset is located to determine the load rating 632. It is determined 634 if the load rating factor is less than a predetermined threshold (e.g., 1). If it is determined 634 that the load rating factor is less than the predetermined threshold, it may be determined that the bridge is in danger of failing. If this is the case, physical inspection and/or rehabilitation may be recommended. If it is determined 634 that the load rating factor is not less than the predetermined threshold, an equivalent accumulated damage 660 may be estimated from the load rating factor. The equivalent accumulated damage is used in addition to the potential damage accumulation to determine a fatigue life prediction 680.

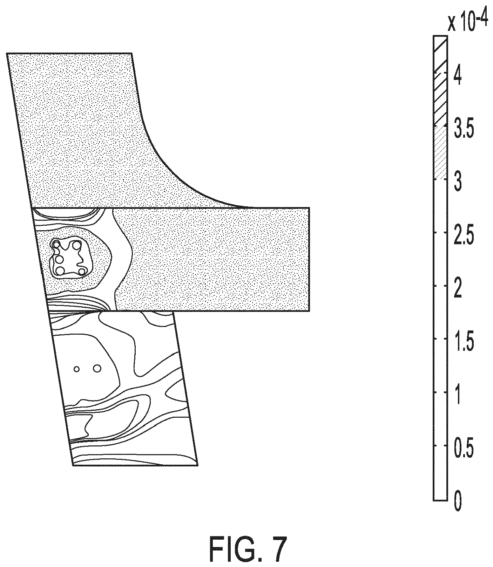

According to embodiments described herein, structural analysis models are used to calibrate sensor measurements, to locate critical areas, and/or to interpolate stress where direct measurements may not be available. With knowledge of bridge structure configuration (dimensions, materials and construction methods etc.), structural analysis will provide estimation of stress profile under typical traffic load. Several structural analysis models can be used alone or in combination including an analytical influence line model, a grillage model, and a finite element model (FEM). For bridges with simple geometry, an analytical model from structural mechanics may suffice, while for a bridge with complex geometry or material configuration, a more detailed model such as a FEM may be needed. FIG. 7 demonstrates a strain profile of a tram bridge with curved ramp under a moving tram that is calculated using a FEM.

According to embodiments described herein, the traffic load model may be determined using optical sensor measurements. The average daily damage (ADD) may be calculated using various measured and known parameters. The fatigue damage is determined by determining the stress range calculated shown in (7).

$$s = \Delta\sigma = \sigma_{max} - \sigma_{min} \qquad (7)$$

Here, $\sigma_{max}$ and $\sigma_{min}$ are the maximum and minimum stresses at a given point of the bridge and at a given stress cycle. In practice, the stress ranges of real traffic loads to which the bridge is exposed can be classified by means of the rainflow counting method. The relationship between the number of load cycles N and the stress range s can be approximated by (8).

$$Ns^k = C \qquad\qquad (8)$$

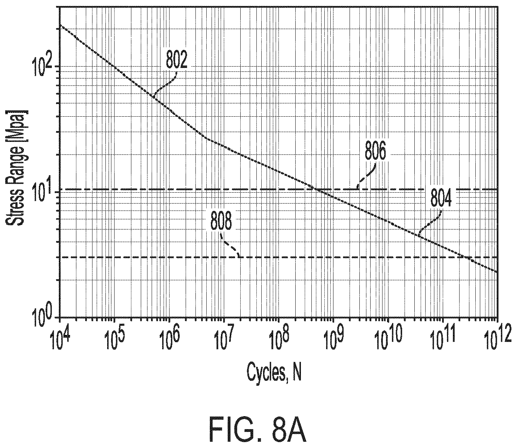

Here, $1/k$ is the slope of the strain-life curve represented as a line on a log-log scale. The constant C depends on stress concentration, joint geometry and is dependent on the designed construction of the bridge. In practice, two or more line sections with different slopes may be used to describe more complex stress-life behavior. FIG. 8A shows a first line section 802 having a first slope and a second line section 804 having a second slope. In the example shown in FIG. 8A, the top line 806 represents the upper bound of stresses observed from a bridge and bottom line 808 represents the lower bound of stresses observed from the bridge.

The average daily damage *ADD* is given by the Palmgren-Miner theory of linear damage accumulation shown in (9).

$$ADD = \sum_i n_i / N_i \qquad\qquad (9)$$

Here $n_i$ is the number of cycles at stress level *i* counted from actual traffic load, and $N_i$ is the number of fatigue cycles at stress level *i* on the S-N curve.

According to embodiments described herein, a traffic growth trend can be estimated using an initial ADD growth model for fatigue damage due to daily traffic model is represented by (10).

$$ADD(t) = a * (1 + \beta)^t \qquad\qquad (10)$$

Here, *a* is the initial ADD, and $\beta$ is the growth factor. The parameters can be estimated using Bayesian inference and/or ordinary least squares (OLS) regression using the real-time traffic load data.

The determination of the load rating may be a standardized procedure during bridge inspection that determines if the asset under investigation can hold a designed load. Although the detailed specifications for the process of determining the load rating varies based on different standards used around the world, the fundamental concept remains the same. The load rating factor (RF) is generally expressed as the ratio between the available bridge capacity for traffic loads and the load effects of rating vehicle as shown in (11).

$$RF = \frac{L_{cap}}{L_{standard}} = \frac{C_{material} - \sum \alpha_i L_i}{L_{standard}} \qquad\qquad (11)$$

Here $L_{cap}$ is the available bridge capacity for traffic loads, $L_{standard}$ is the load effects of rating vehicle, $C_{material}$ is the load capacity determined by the ultimate strength of material (concrete, steel, etc.), $L_i$ and $\alpha_i$ are various load effect and corresponding load factors.

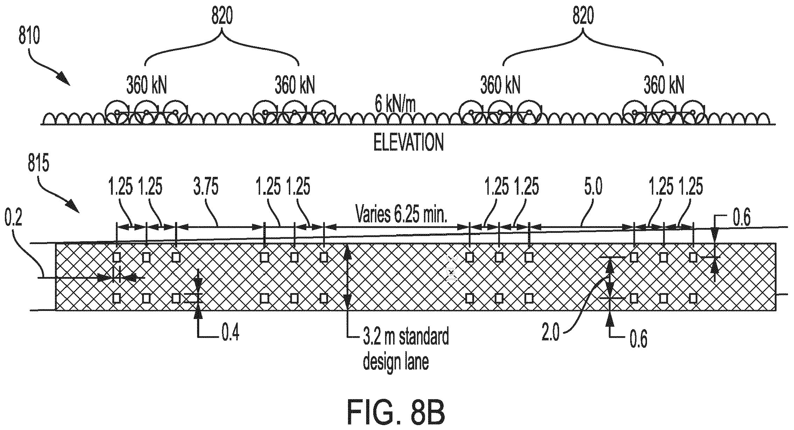

An example of a standard load is shown in FIG. 8B. A side view 510 and a top view 515 show a uniform distributed load and four triaxle groups. It is to be understood that FIG. 8B illustrates an example of a standard load. Different standard loads may be used based the location of the asset.

According to embodiments described herein, a virtual standard load can be constructed from a point load influence line extracted from FO sensor measurements from multiple locations along the bridge, taking advantage of the distributed characteristics of FO sensors.

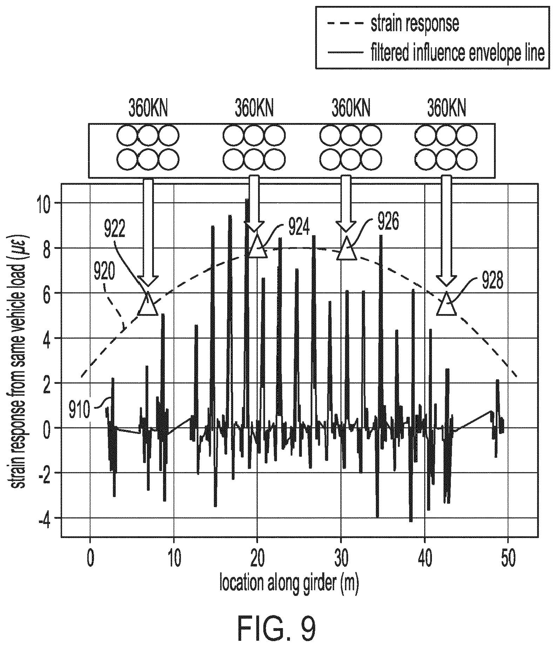

The procedure for transfer a known vehicle load to a standard load is as follows, as illustrated in FIG. 9.

1. Measure multiple strain responses using distributed fiber optic sensors along the length of the bridge span
2. Plot the strain 910 from same vehicle load at multiple sensing points along the bridge span normalized by applied vehicle load.
3. The envelope line 920 $y=f(x)$ fitted from the peaks of strain responses describes the strain yield from a unit load applied at location x. For simply supported beams, a parabolic formula can be assumed.
4. The mobile traffic load and/or the stationary traffic load can be expressed as a superposition of a series of loads applied at multiple axle locations 922, 924, 926, 928.

Once the equivalent strain response under standard vehicle load is extracted, the load rating factor can be calculated using (11). If the calculated load rating factor is less than 1, it may indicate that the bridge is not capable of holding the designed fatigue load and further inspection and potential rehabilitation may be recommended.

According to embodiments described herein, predicting the fatigue life for old bridges may be done at least partially by estimating the damage already accumulated. Estimating the damage already accumulated may be accomplished by using an equivalent damage factor is designed by comparing the load rating factor at specific time point to the designed load rating factor as defined in (12).

$$D_{pre} = \frac{\overline{RF} - RF(t)}{\overline{RF}} \qquad (12)$$

Here, $D_{pre}$ is the damage previously accumulated, $\overline{RF}$ is the designed load rating factor, and $RF(t)$ is the load rating factor at given time point $t$.

The remaining damage capacity for future fatigue load can be determined using (13).

$$D_{fatigue} = 1 - D_{pre} \qquad (13)$$

Embodiments described herein may consider both precondition and rehabilitation of bridge structures. After restorative work on the bridge, the load rating factor will change (increase), resulting in smaller accumulated damage.

The relation between accumulated fatigue damage $D_{fatigue}$ at year $t$ and traffic load growth rate $\beta$ is established as shown in (14).

$$D_{fatigue} = 365 * ADD(t) * \frac{(1+\beta)^R - 1}{\beta} \qquad (14)$$

Once the remaining fatigue damage capacity and traffic growth factor have been determined, the remaining fatigue life in years can be calculated by rewriting (14) into (15).

$$R(t) = \frac{\ln\left[\frac{\beta * D_{fatigue}}{365 * ADD(t) * (1+\beta)} + 1\right]}{\ln(1+\beta)} \qquad (15)$$

Here, $R(t)$ is the remaining fatigue life in years at the inspection time $t$, $\beta$ is estimated traffic growth factor, $D_{fatigue}$ is the remaining fatigue capacity after considering precondition and rehabilitation, $ADD(t)$ is the $ADD$ estimated at the inspection time $t$.

Example:

Over a 5-day window in October 2018, 112 FO sensors were installed throughout the structure of the Banksia Street bridge in Heidelberg, Victoria, Australia. These signals were bundled in groups of 8, and routed to a central computing system for data acquisition and storage. For power, the system tapped into a pre-existing 240V line for the nearby vehicle messaging system (VMS) sign. A router was included to allow user remote access to the system.

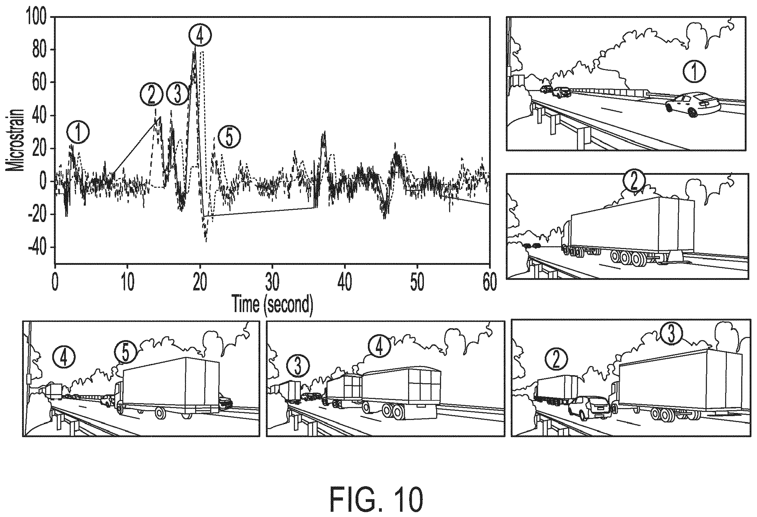

The location and configurations of fiber optic sensors are carefully designed to capture the loads of interest to asset stakeholders in an efficient way. A validation test was held and FIG. 10 shows a 1-minute window of the test for which independent video data was recorded, overlaying the results of the embodiments described herein and the wireless sensor system (2Hz nominal sampling rate, and 40Hz when triggered by a dynamic load) with the corresponding vehicle pass events for the key strain waves recorded.

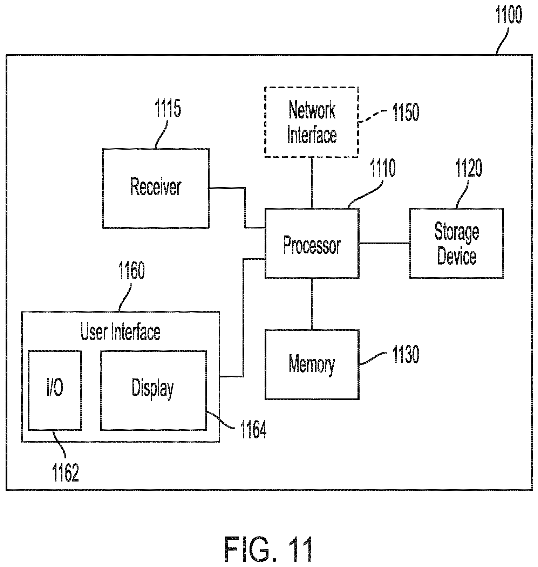

The above-described methods can be implemented on a computer using well-known computer processors, memory units, storage devices, computer software, and other components. A high-level block diagram of such a computer is illustrated in FIG. 11. Computer 1100 contains a processor 1110, which controls the overall operation of the computer 1000 by executing computer program instructions which define such operation. It is to be understood that the processor 1110 can include any type of device capable of executing instructions. For example, the processor 1110 may include one or more of a central processing unit (CPU), a graphical processing unit (GPU), a field-programmable gate array (FPGA), and an application-specific integrated circuit (ASIC). The computer program instructions may be stored in a storage device 1020 (e.g., magnetic disk) and loaded into memory 1130 when execution of the computer program instructions is desired. Thus, the steps of the methods described herein may be defined by the computer program instructions stored in the memory 1130 and controlled by the processor 1110 executing the computer program instructions. The computer 1100 may include one or more network interfaces 1150 for communicating with other devices via a network. The computer 1100 also includes a user interface 1160 that enables user interaction with the computer 1100. The user interface 1160 may include I/O devices 1162 (e.g., keyboard, mouse, speakers, buttons, etc.) to allow the user to interact with the computer. Such input/output devices 1162 may be used in conjunction with a set of computer programs in accordance with embodiments described herein. The user interface also includes a display 1164. According to various embodiments, FIG. 11 is a high-level representation of possible components of a computer for illustrative purposes and the computer may contain other components.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

The various embodiments described above may be implemented using circuitry and/or software modules that interact to provide particular results. One of skill in the computing arts can readily implement such described functionality, either at a modular level or as a whole, using knowledge generally known in the art. For example, the flowcharts illustrated herein may be used to create computer-readable instructions/code for execution by a processor. Such instructions may be stored on a computer-readable medium and transferred to the processor for execution as is known in the art.

The foregoing description of the example embodiments have been presented for the purposes of illustration and description. It is not intended to be exhaustive or to limit the inventive concepts to the precise form disclosed. Many modifications and variations are possible in light of the above teachings. Any or all features of the disclosed embodiments can be applied individually or in any combination, not meant to be limiting but purely illustrative. It is intended that the scope be limited by the claims appended herein and not with the detailed description.

**Claims**

1.   A method comprising:

receiving a plurality of strain values from a plurality of sensors permanently attached to an asset configured to carry a load;
monitoring a strain profile of the asset based on the plurality of strain values;
receiving additional information about the asset;
monitoring a load rating factor based on the additional information and the strain profile;
monitoring an equivalent accumulated damage factor based on the load rating factor; and
calculating a remaining life prediction for the asset based on the strain profile and the equivalent accumulated damage factor.

2.   The method of claim 1, further comprising determining potential damage accumulation based on the strain profile and wherein calculating the remaining life prediction for the asset comprises calculating a remaining life prediction for the asset based on the potential damage accumulation and the equivalent accumulated damage factor.

3.   The method of claim 2, further comprising monitoring one or more metrics comprising an estimation of stress under a typical load, an average daily damage, and a predicted traffic load, and wherein the potential damage accumulation is based on the one or more metrics.

4.   The method of claim 2, further comprising receiving a stress-life curve of the asset, and wherein monitoring the potential damage accumulation comprises monitoring the potential damage accumulation based on the stress- life curve.

5.   The method of claim 1 wherein the additional information comprises one or more of asset design standards, asset specifications, and locations of the plurality of sensors.

6. The method of claim 1, wherein receiving the plurality of strain values comprises continuously receiving the plurality of strain values.

7. The method of claim 1, further comprising:

   determining whether the load rating factor is less than a predetermined threshold;
   if it is determined that the load rating value is less than the predetermined threshold, recommend one or more of inspection and rehabilitation of the asset; and
   if it is determined that the load rating value is not less than the threshold, calculate the remaining life prediction for the asset.

8. The method of claim 1, wherein the asset comprises one or more of a road, a bridge, a runway, a port wharf, a cable structure, and a rail structure.

9. A system, comprising:

   sensors disposed on an asset configured to carry a load, the sensors configured to measure a strain values of the asset for a sample of traffic loading events caused by objects of unknown weight;
   a processor configured to:

      receive a plurality of strain values from a plurality of sensors permanently attached to an asset configured to carry a load;
      monitor a strain profile of the asset based on the plurality of strain values;
      receive additional information about the asset;
      monitor a load rating factor based on the additional information and the strain profile;
      monitor an equivalent accumulated damage factor based on the load rating; and
      calculate a remaining life prediction for the asset based on the strain profile and the equivalent accumulated damage factor.

10. The system of claim 9, wherein the sensors are optical sensors.

11. The system of claim 9, wherein the sensors are fiber Bragg grating (FBG) sensors.

12. The system of claim 9, further comprising monitoring potential damage accumulation based on the strain profile and wherein calculating the remaining life prediction for the asset comprises calculating a remaining life prediction for the asset based on the potential damage accumulation and the equivalent accumulated damage factor.

13. The system of claim 12, further comprising monitoring one or more metrics comprising an estimation of stress under a typical load, an average daily damage, and a predicted traffic load, and wherein the potential damage accumulation is based on the one or more metrics.

14. The system of claim 12, further comprising receiving a stress-life curve of the asset, and wherein monitoring the potential damage accumulation comprises monitoring the potential damage accumulation based on the stress- life curve.

15. The system of claim 9, wherein the additional information comprises one or more of asset design standards, asset specifications, and locations of the plurality of sensors.

16. The system of claim 9, wherein receiving the plurality of strain values comprises continuously receiving the plurality of strain values.

17. The system of claim 9, further comprising:

   determining whether the load rating factor is less than a predetermined threshold;
   if it is determined that the load rating value is less than the predetermined threshold, recommend one or more of inspection and rehabilitation of the asset; and
   if it is determined that the load rating value is not less than the threshold, calculate the remaining life prediction for the asset.

**18.** The system of claim 9, wherein the asset comprises one or more of a road, a bridge, a runway, a port wharf, a cable structure, and a rail structure.

**19.** The system of claim 9, wherein the objects comprise one or more of vehicles, pedestrians, planes, boats, cable cars, ski lifts, and train cars.

**20.** A non-transitory computer readable medium storing computer program instructions, the computer program instructions when executed by a processor cause the processor to perform operations comprising:

receiving a plurality of strain values from a plurality of sensors permanently attached to an asset configured to carry a load;
monitoring a strain profile of the asset based on the plurality of strain values;
receiving additional information about the asset;
monitoring a load rating factor based on the additional information and the strain profile;
monitoring an equivalent accumulated damage factor based on the load rating factor; and
calculating a remaining life prediction for the asset based on the strain profile and the equivalent accumulated damage factor.

FIG. 1

FIG. 2A

FIG. 2B

FIG. 3

FIG. 4

EP 3 951 344 A1

Receive strain values from sensors disposed on an asset — 510

Monitor strain profile — 520

Receive additional information — 530

Monitor load rating — 540

Monitor equivalent accumulated damage factor — 550

Calculate remaining life prediction for the asset — 560

FIG. 5

FIG. 6

Streaming FO sensor measurement — 610

Signal processing

Strain profile — 620

Calibrate

Structural Analysis Model (FEM for example) — 622

Rainflow counting

Stress ranges — 640

Traffic load model — 642

Predicted traffic load — 644

Potential damage accumulation from Palmgren-Miner rule — 662

Bridge specs and FO sensor location — 624

Equivalent strain response subject to standard load — 630

Bridge S-N curve — 650

Equivalent accumulated damage estimated from RF — 660

No

Fatigue life prediction (N in years) — 680

Bridge design standards (AS5100 etc.) — 626

Load Rating — 632

Rating factor (RF)<1? — 634

Yes

Bridge in danger: Inspection/Rehabilitation recommended — 670

FIG. 7

FIG. 8A

810

820

360 kN    360 kN    6 kN/m    360 kN    360 kN

ELEVATION

815

1.25 1.25    3.75    1.25 1.25    Varies 6.25 min.    1.25 1.25    5.0    1.25 1.25    0.6

0.2

0.4    3.2 m standard
design lane

2.0    0.6

FIG. 8B

EP 3 951 344 A1

FIG. 9

FIG. 10

EP 3 951 344 A1

FIG. 11

Europäisches
Patentamt

European
Patent Office

Office européen
des brevets

# EUROPEAN SEARCH REPORT

**Application Number**

EP 21 18 2995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAGLAYAN B O ET AL: "Fatigue life evaluation of a through-girder steel railway bridge", ENGINEERING FAILURE ANALYSIS, PERGAMON, GB, vol. 16, no. 3, 1 April 2009 (2009-04-01), pages 765-774, XP025885330, ISSN: 1350-6307, DOI: 10.1016/J.ENGFAILANAL.2008.06.018 [retrieved on 2008-06-26] * the whole document * | 1-20 | INV. G01M5/00 G01L1/24 G01M11/08 |
| A | Jayathilaka Sameera Tharanga ET AL: "Condition based bridge management with SHM integration: A novel approach to remaining life estimation of bridges", , 1 January 2018 (2018-01-01), pages 1-158, XP055874278, Retrieved from the Internet: URL:https://dr.lib.iastate.edu/server/api/core/bitstreams/325eebf6-3318-4089-af82-4d550b113c16/content [retrieved on 2021-12-17] * the whole document * | 1-20 | |
| A | US 9 803 342 B2 (TECH MINING PTY LTD [AU]) 31 October 2017 (2017-10-31) * the whole document * | 1-20 | TECHNICAL FIELDS SEARCHED (IPC) G01M G01L |
| A | US 2006/233485 A1 (ALLEN DONALD W [US]) 19 October 2006 (2006-10-19) * the whole document * | 1-20 | |

The present search report has been drawn up for all claims

| Place of search | Date of completion of the search | Examiner |
|---|---|---|
| The Hague | 3 January 2022 | Nelva-Pasqual, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 2995

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2022

| Patent document cited in search report | | Publication date | Patent family member(s) | | Publication date |
|---|---|---|---|---|---|
| US 9803342 | B2 | 31-10-2017 | US | 2017089044 A1 | 30-03-2017 |
| | | | US | 2018058045 A1 | 01-03-2018 |
| | | | US | 2018058046 A1 | 01-03-2018 |
| US 2006233485 | A1 | 19-10-2006 | BR | PI0608498 A2 | 16-11-2010 |
| | | | GB | 2437007 A | 10-10-2007 |
| | | | US | 2006233485 A1 | 19-10-2006 |
| | | | WO | 2006102259 A2 | 28-09-2006 |

EPO FORM P0459

For more details about this annex : see Official Journal of the European Patent Office, No. 12/82